# EUROPEAN PATENT SPECIFICATION

(11) **EP 4 589 510 B1**
(45) Date of publication and mention of the grant of the patent: **04.11.2026**
(21) Application number: 24186980.9
(22) Date of filing: 07.07.2024
(51) Int. Cl.: G06Q 10/087, B65G 1/137

(54) **HANDLING ITEM UNAVAILABILITY IN AN AUTOMATED STORAGE AND RETRIEVAL SYSTEM**
HANDHABUNG VON NICHTVERFÜGBARKEIT EINES ARTIKELS IN EINEM AUTOMATISIERTEN REGALBEDIENUNGSSYSTEM
GESTION D'INDISPONIBILITÉ D'ÉLÉMENT DANS UN SYSTÈME DE STOCKAGE ET DE RÉCUPÉRATION AUTOMATISÉ

(30) Priority: 22.01.2024 US 202463623385 P
(43) Date of publication of application: 23.07.2025
(73) Proprietor: AutoStore Technology AS, 5578 Nedre Vats (NO)
(72) Inventor: Warden, Benjamin, 5578 Nedre Vats (NO); Guenter, Benjamin, 5578 Nedre Vats (NO)
(74) Representative: Kilburn & Strode LLP

(56) References cited:
- WO-A1-2022/256564
- WO-A2-2022/256253
- US-A1- 2020 172 334
- US-A1- 2020 357 040
- US-A1- 2021 387 808
- US-A1- 2022 237 530
- US-A1- 2022 391 828
- US-A1- 2023 230 031
- US-A1- 2023 271 785
- US-A1- 20240 004 391
- US-B1- 9 953 287

## Description

### TECHNICAL FIELD

The disclosure relates to handling item unavailability in an automated storage and retrieval system. More particularly, it relates to an automated storage and retrieval system in which actions are carried out in response to determining item unavailability, and to a method comprising actions carried out in response to determining item unavailability.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The items delivered to the packing station or port are specified in orders received at the automated storage and retrieval system. In some cases, an item in a container is identified as being unavailable. Unavailability of an item in a container can occur for many reasons. For example, in a grocery implementation, food items within a container may have become spoiled. As another example, items within a container may be damaged. As a further example, a container may not contain an item (or a sufficient number of the item) as a consequence of retail shrinkage, such as employee theft. In addition, an item may be unavailable as a consequence of inaccessibility of a section of the three-dimensional grid in which a container storing the item is located (for example, in the case of malfunction of a robotic container-handling vehicle blocking access to that section of the grid).

Where the unavailability of an item in a container is identified during processing of an order comprising that item, the unavailability of the item in the container is said to be 'unplanned'. Unplanned unavailability of an item in a container can cause significant delays to order processing. For example, if an item in a container is identified as being unavailable by a picker or other operator at a packing station, then another container storing the item may be retrieved by a robotic container-handling vehicle. However, that other container may be located deep within the grid, resulting in a long delay while containers located above the other container are removed in order to allow access to the other container.

One known solution to the unavailability of an item in a container is to simply omit the item from the order. However, this results in orders being only partially fulfilled, reducing customer satisfaction. Another known solution is to pick a substitute item 'on the fly' and retrieve a container storing that substitute item. However, this approach may result in a long wait time at the packing station, particularly if the container storing the substitute item is located deep within the grid. A further known solution is to identify the items in the order that are unavailable at the time the order is processed, and subsequently plan a separate process to retrieve substitute items from the grid at a later date. However, this approach can result in a significant delay to the processing of an order, because the separate substitute-picking process will need to be added to the schedule of orders being processed by the automated storage and retrieval system.

US 2023/271785 A1 (GRAVELLE SCOTT [CA] ET AL)of August 31st, 2023 discloses a system for management of a warehouse, however fails to disclose solutions for efficiently handling the unplanned unavailability of items.

US 2022/391828 A1 (WINTZ DANIEL THOMAS [US] ET AL) of December 8th, 2022 discloses comparing travel times for items in containers of an automated warehouse.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a flowchart of a method of controlling one or more robotic container-handling vehicles in the system of Fig. 1;
Fig. 6 shows a flowchart of a method of selecting a storage container from a subset of storage containers identified in the method of Fig. 5;
Fig. 7 shows a flowchart of another method of selecting a storage container from the subset of storage containers identified in the method of Fig. 5;
Fig. 8 shows a flowchart of a further method of selecting a storage container from the subset of storage containers identified in the method of Fig. 5.

### DETAILED DESCRIPTION

In overview, the disclosure relates to a method that can be carried out by a control system of the automated storage and retrieval system, in the event that an item in a bin is determined to be unavailable. The method includes identifying a subset of bins in the grid that store the item or a substitute item for the item. The method also includes determining one or more parameter values for each of the identified subset of bins, and selecting a bin from the subset of bins based on the parameter values. The selection of a bin from the subset of bins based on the parameter values allows candidate bins storing the item or a substitute item to be evaluated in order to determine the most appropriate bin for retrieval from the grid.

For example, the one or more parameter values may include an estimated time to deliver the bin to a port, a location of the bin within the grid, and/or an identification of whether that bin is scheduled for delivery to the port in order to deliver an item in an order that is being processed in parallel at the port. In these cases, the parameter values can be evaluated in order to select a bin that will maintain system throughput and minimise delay at the port. As another example, the one or more parameter values may include an indication of whether the bin stores the item itself or a substitute item, and/or a priority value of a substitute item stored in the bin, if the bin stores a substitute item. In these cases, the parameter values can be evaluated in order to select a bin that maximises the customer's preference for the item itself or the highest possible ranked substitute item.

The method can also evaluate both parameter values associated with throughput and parameter values associated with customer preference, in order to balance the considerations of throughput and customer preference. For example, the parameter values can be evaluated in order to select a bin that includes the item itself or the most preferred substitute, provided that delivery of the selected bin does not result in delay at the port so that system throughput is maintained. In this way, the automated storage and retrieval system can respond to an error state of unavailable inventory without sacrificing customer preferences.

The method can be implemented by a control system of an automated storage and retrieval system comprising: a plurality of storage locations, each of the plurality of storage locations being configured to store a respective one of a plurality of bins, each of the plurality of bins being configured to store one or more items; and one or more robots configured to deliver bins from the plurality of storage locations to a port. The automated storage and retrieval system may comprise a storage grid (e.g., a three-dimensional storage grid) comprising the plurality of storage locations. The one or more robots may be arranged to traverse the storage grid (e.g., using a rail system arranged on top of the grid).

### Automated storage and retrieval system overview

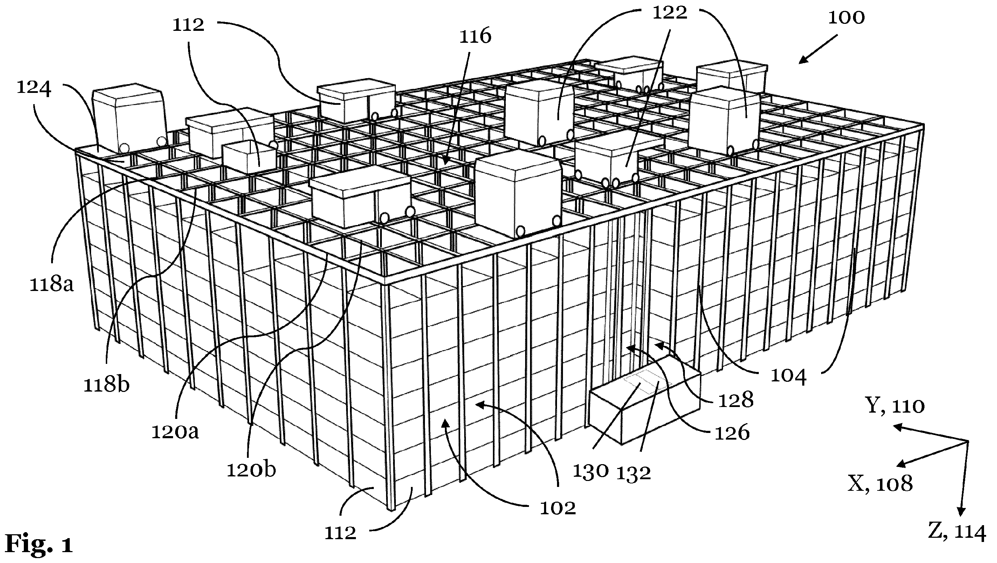

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

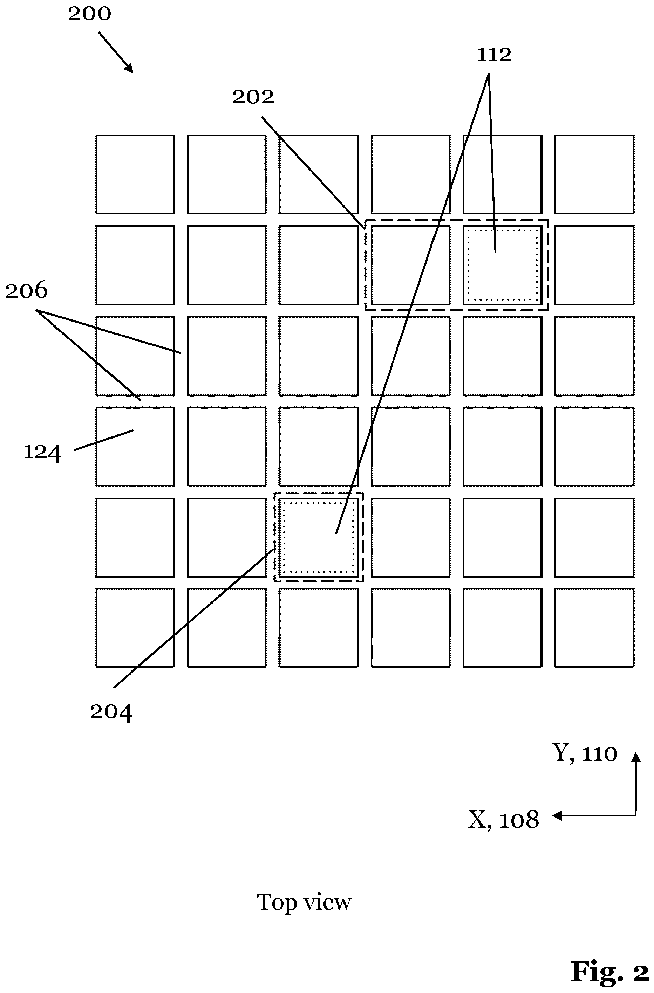

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

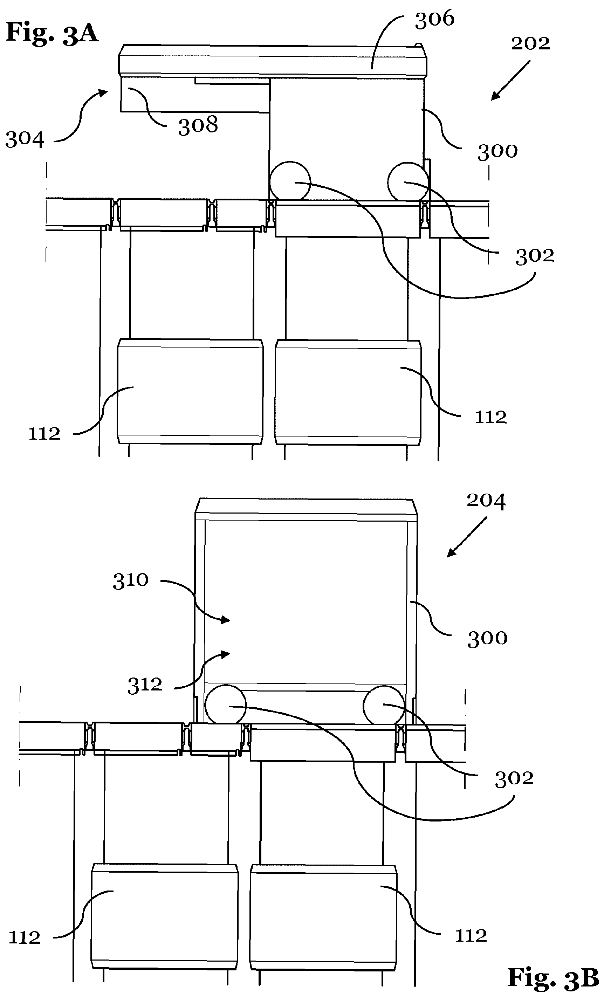

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

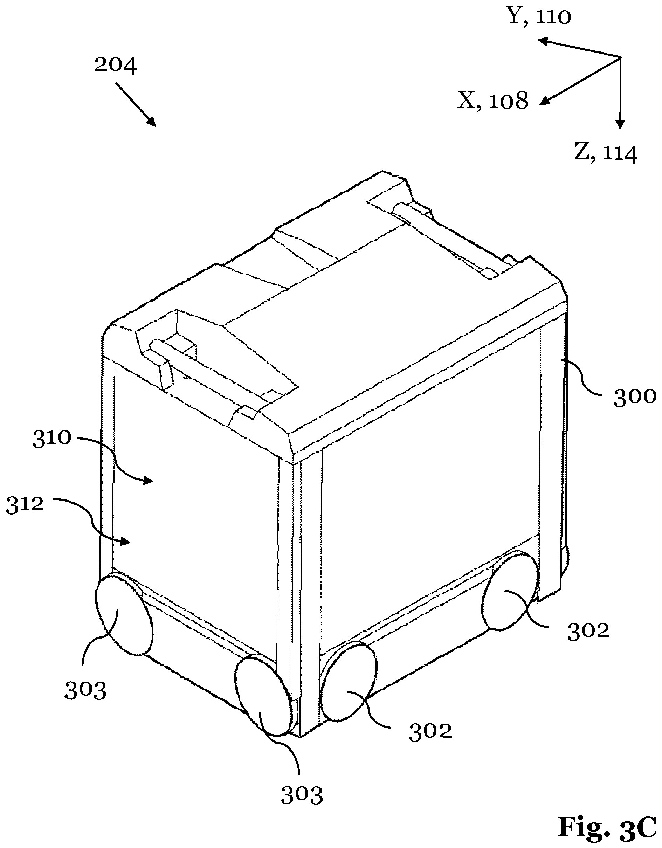

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

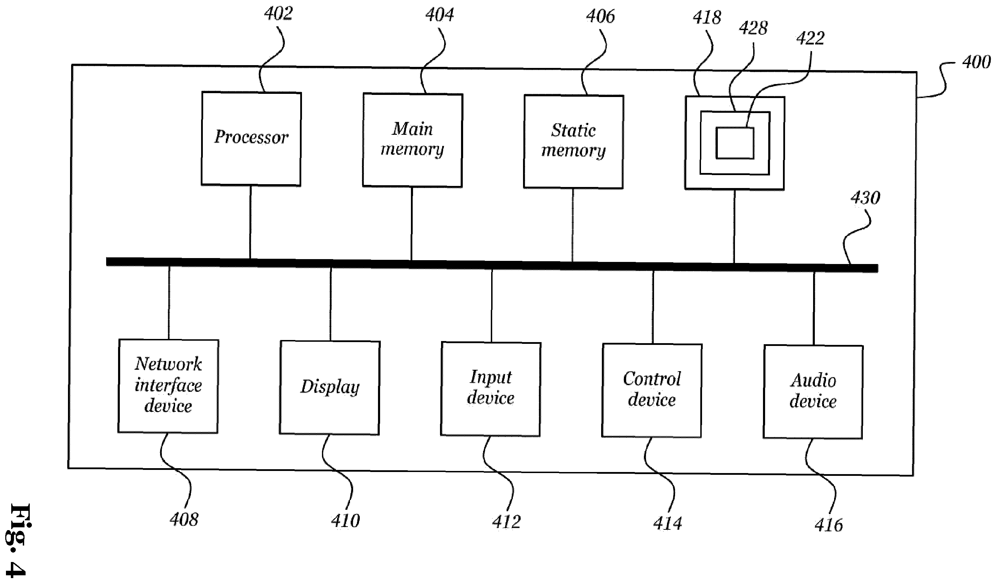

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Handling item unavailability in the automated storage and retrieval system

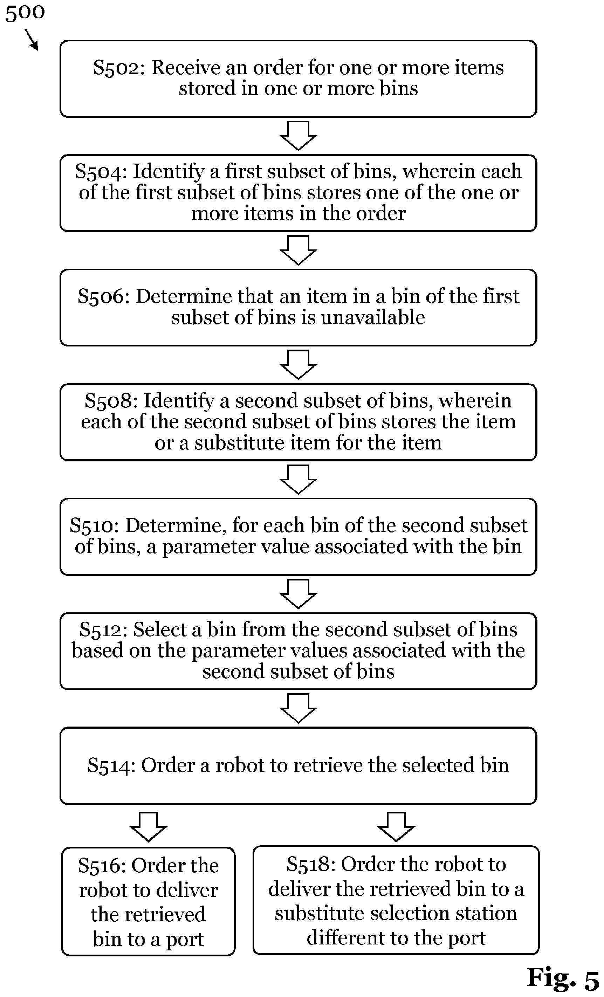

Fig. 5 is a flowchart of a method 500 of controlling one or more robots 202, 204 in the automated storage and retrieval system described above. In particular, the method 500 comprises actions carried out by the control system described above (e.g., by the processing system 400) in response to determining that an item in a bin 112 is unavailable.

At S502, an order for one or more items stored in bins 112 in the grid 100 is received at the control system. In some examples, the order identifies one or more substitute items for one or more items in the order. For example, substitute items may be specified for some items in the order, but not for other items in the order. Where substitute items are identified for an item in the order, the substitute items may have a priority value or ranking that identifies whether one substitute item for a particular item is preferable to another substitute item for that particular item.

At S504, the control system identifies a first subset of bins 112. Each bin 112 in the first subset of bins 112 stores one of the items in the order. Therefore, by ordering robots 202, 204 to deliver each bin 112 in the first subset of bins 112 to a port 130, 132, all items in the order would be expected to be delivered to the port 130, 132.

At S506, the control system determines that an item in a bin 112 of the first subset of bins 112 is unavailable. In determining that the item in the bin 112 is unavailable, the control system may receive an indication from a picker or other operator (e.g., at the port 130, 132) that the item in the bin 112 is unavailable. For example, the bin 112 may be delivered to the port 130, 132 by a robot 202, 204, and the picker may discover that the item in the bin 112 is damaged, spoiled, missing, etc. Alternatively, in determining that the item in the bin 112 is unavailable, the control system may receive an indication from a robot 202, 204 that the item in the bin 112 is unavailable. For example, the robot 202, 204 may comprise a camera that inspects the content of the bin 112 once it has been retrieved from the grid 100. The robot 202, 204 may determine, by analysing an image captured by the camera, that the item in the bin 112 is damaged, spoiled, missing, etc. As another example, the robot 202, 204 may comprise a scale that determines the weight of the bin 112 being retrieved from the grid 100. The robot 202, 204 may determine, from the weight determined by the scale, that the bin 112 is empty.

As an alternative to receiving an indication that the item in the bin 112 is unavailable, the control system may determine that the item in the bin 112 is unavailable at S506 by determining that a storage location storing the bin 112 is inaccessible. For example, if a robot 202, 204 malfunctions on the rail system 116 and prevents access to a column 102 in which the bin 112 is stored, then it will not be possible to access the bin 112 until the robot 202, 204 has been serviced or moved. In this case, the control system can determine that all bins 112 in the column 102 are inaccessible.

At S508, the control system identifies a second subset of bins 112. Each bin 112 in the second subset of bins 112 either stores the item, or a substitute item for the item. For example, in some cases, the same item may be stored in multiple bins 112, meaning that other bins 112 in the grid 100 may store the item that was determined at S506 as being unavailable. In addition, other bins 112 in the grid 100 may store substitute items identified in the order as being suitable substitutes for the item that was determined at S506 as being unavailable.

At S510, the control system determines, for each bin 112 in the second subset of bins 112, one or more parameter values associated with the bin 112. As described in more detail below, the one or more parameter values may include one or more of the following: an estimated amount of time to deliver the bin 112 to the port 130, 132; a location of the bin 112 within the grid 100; an identification of whether the bin 112 stores the item or a substitute item for the item; an identification of whether the bin 112 is scheduled for delivery to the port 130, 132 in order to deliver an item in a different order that is being simultaneously processed at the port 130, 132; and a priority value of a substitute item stored in the bin 112 (if the bin 112 stores a substitute item for the item).

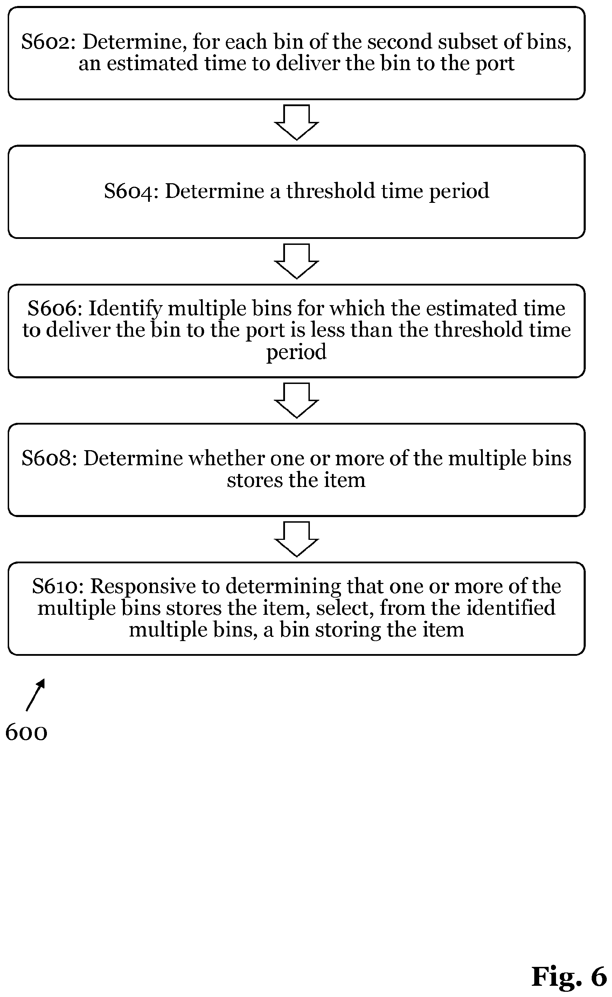

At S512, the control system selects a bin 112 from the second subset of bins 112 based on the parameter values associated with the bins 112 in the second subset of bins 112. The process for selecting a bin 112 from the second subset of bins 112 based on the parameter values is described in more detail below with reference to Figs. 6 to 8.

At S514, the control system orders a robot 202, 204 to retrieve the selected bin 112 from the grid 100. The location to which the robot 202, 204 delivers the retrieved bin 112 depends on whether the item from the retrieved bin 112 is being added to the other items in the order at the port 130, 132 or at a separate substitute selection station (e.g., in a different location to the port 130, 132). If the item is being added to the other items in the order at the port 130, 132, then the control system orders, at S516, the robot 202, 204 to deliver the retrieved bin 112 to the port 130, 132. Alternatively, if the item is being added to the other items in the order at a separate substitute selection station, then the control system orders, at S518, the robot 202, 204 to deliver the retrieved bin 112 to the substitute selection station.

By determining parameter values for the bins 112 in the second subset of bins 112 and selecting a bin 112 from the second subset of bins 112 based on the parameter values, candidate bins 112 storing the item or a substitute item are evaluated in order to determine the most appropriate bin 112 for retrieval from the grid 100. As explained further below, this minimises delays in processing orders for which an item in a bin 112 has been determined as being unavailable, while maximising consideration of customer preferences.

### Selection of a bin from the second subset of bins

Fig. 6 is a flowchart of a method 600 carried out by the control system in order to carry out steps S510 and S512 of the method 500. In the method 600, the one or more parameter values associated with each bin 112 in the second subset of bins 112 include: the estimated time to deliver that bin 112 to the port 130, 132; and an identification of whether that bin 112 stores the item or a substitute item for the item.

At S602, the control system determines the parameter values at S510 by determining, for each bin 112 in the second subset of bins 112, an estimated time to deliver the bin 112 to the port 130, 132. The estimated time to deliver a bin 112 to the port 130, 132 includes the time required for a robot 202, 204 to retrieve the bin 112 from the grid 100 and deliver that bin 112 to the port 130, 132 via one of the port columns 126, 128. That is, the estimated time to deliver the bin 112 to the port 130, 132 includes the estimated time to sequentially lift and reposition any bins 112 that are above the bin 112 in order for it to be retrieved from the grid 100, the estimated time to lift the bin 112 out of the column 102 in which it is located, the estimated time for a robot 202, 204 to traverse the rail system 116 between the column 102 from which the bin 112 is retrieved and a port column 126, 128 associated with the port 130, 132, and the estimated time to lower the bin 112 to the port 130, 132 in the port column 126, 128.

At S604, the control system determines a threshold time period. The threshold time period may be a fixed time period (e.g., two minutes). Alternatively, determining the threshold time period may include determining an estimated order completion time. The estimated order completion time is the amount of time to complete delivery of the first subset of bins 112 to the port 130, 132. In this case, the control system may determine the estimated order completion time as the threshold time period. In a further alternative, the threshold time period may include a fixed (e.g., two-minute) or percentage (e.g., 10%) margin added to the estimated order completion time, to accommodate an acceptable level of delay at the port 130, 132.

At S606, the control system identifies multiple bins 112 for which the estimated time to deliver the bin 112 to the port 130, 132 determined at S602 is less than the threshold time period determined at S604. Identifying the multiple bins 112 may comprise comparing, for each bin 112 in the second subset of bins 112, the estimated time to deliver the bin 112 to the port 130, 132 with the threshold time period. It will be appreciated that if there is only one bin 112 for which the estimated time to deliver the bin 112 to the port 130, 132 is less than the threshold time period, then that bin 112 is selected at S512. In addition, if there are no bins 112 for which the estimated time to deliver the bin 112 to the port 130, 132 is less than the threshold time period, then the method may either return to S604 where the threshold time period can be increased, or the item can be omitted from the order.

At S608, the control system further determines the parameter values at S510 by identifying whether one or more of the multiple bins 112 identified at S606 stores the item. It will be appreciated that selecting a bin 112 containing the item is preferable to the customer than selecting a bin 112 containing a substitute item. Therefore, the method 600 initially determines whether a bin 112 storing the item can be selected, prior to consideration of substitute items.

In response to determining at S608 that one or more of the multiple bins 112 identified at S606 stores the item, the control system carries out the selection of the bin 112 from the second subset of bins 112 at S512 by selecting, at S610, a bin 112 storing the item from the multiple bins 112 identified at S606. It will be appreciated that this selection at S610 is based on two parameter values for each bin 112: the estimated time to deliver the bin 112 to the port 130, 132 (used to identify the multiple bins 112 at S606); and the identification of whether the bin 112 stores the item or a substitute item for the item (used in the determination at S608). If more than one of the bins 112 identified at S606 stores the item, then the control system may select, at S610, the bin 112 having the lowest estimated delivery time to the port 130, 132 (i.e., using the estimated delivery times calculated at S602).

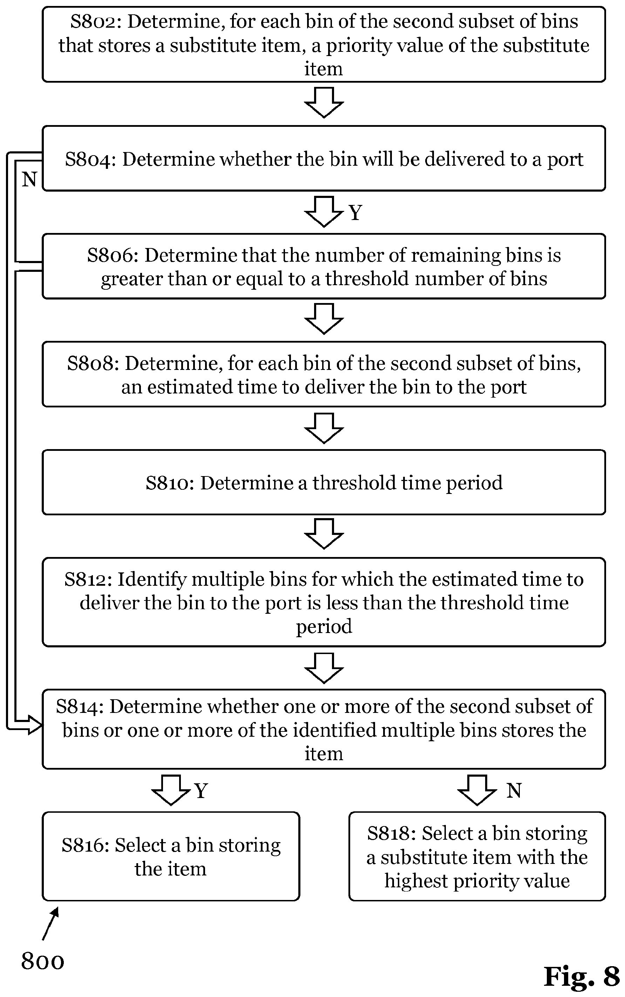

If one of the multiple bins 112 identified at S606 does not store the item, then the control system proceeds to consider bins 112 storing substitute items for the item. For example, the selection of the bin 112 at S512 may involve selecting, from the multiple bins 112 identified at S606, a bin 112 storing a substitute item for the item. This selection of a substitute item may also account for the priority values of the substitute items in the bins 112 (e.g., using the method of Fig. 8 described below).

By determining the parameter value of the estimated time to deliver bins 112 in the second subset of bins 112 to the port 130, 132, a bin 112 can be selected at S610 so that system throughput is maintained (i.e., by avoiding or minimising delay at the port 130, 132). In addition, by determining the parameter value of whether the bin 112 stores the item or a substitute item for the item, customer preference for the item itself can be accounted for when selecting the bin 112.

As an alternative to comparing the estimated time to deliver each bin 112 in the second subset of bins 112 to the port 130, 132 against a threshold time period, the control system may simply select, from the second subset of bins 112, the bin 112 with the lowest estimated time for delivery to the port 130, 132. In this case, a single parameter value for each bin 112 is considered in selecting the bin 112 at S512 (i.e., the estimated time to deliver the bin 112 to the port 130, 132).

Instead of determining, at S602, the estimated time to deliver each bin 112 in the second subset of bins 112 to the port 130, 132, the control system may alternatively only calculate, at S602, the estimated time to deliver bins 112 storing items having a priority value above a certain threshold. Then, if none of the bins 112 storing items having a priority value above the threshold can be delivered to the port 130, 132 within the threshold time period determined at S604, the method 600 may return to S602 to calculate the estimated time to deliver bins 112 storing items having lower priority values. In this case, the one or more parameter values associated with each bin 112 also include the priority value of a substitute item in the bin 112. If a bin 112 does not store a substitute item, it can be assigned a priority value that is higher that the priority value of the highest ranked substitute item. In this case, the one or more parameter values may not necessarily include the identification of whether the bin 112 stores the item or a substitute item for the item (i.e., because such information is captured by the priority values).

### Consideration of the number of remaining bins

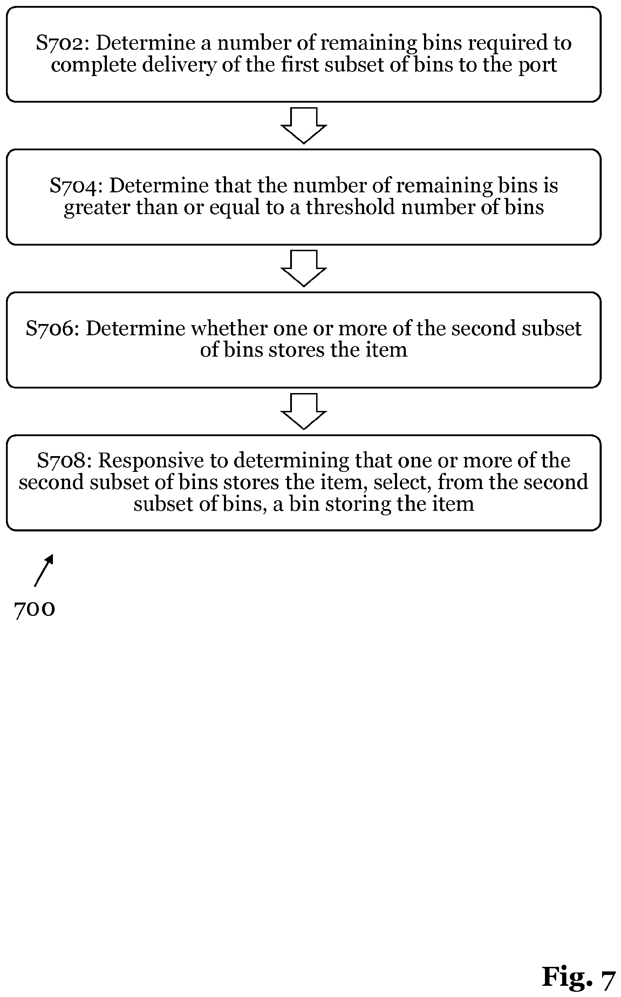

Fig. 7 is a flowchart of a method 700 carried out by the control system. In the method 700, steps S702 and S704 are optional steps that may be carried out between steps S506 and S508 of the method 500. Depending on the outcome of step S704, the method 700 may end at S704, without requiring steps S508 to S518 to be carried out by the control system. Steps S706 and S708 are carried out by the control system in order to carry out steps S510 and S512 of the method 500. In the method 700, the one or more parameter values associated with each bin 112 in the second subset of bins 112 include an identification of whether that bin 112 stores the item or a substitute item for that item.

At S702, after step S506 has been carried out, the control system determines a number of remaining bins 112 required to complete delivery of the first subset of bins 112 to the port 130, 132. In other words, the control system determines the number of bins 112 remaining for delivery to the port 130, 132 in order to complete the order (aside from the item identified at S506 as being unavailable).

At S704, the control system determines that the number of remaining bins 112 determined at S702 is greater than or equal to a threshold number of bins 112. For example, the threshold number of bins 112 may be two or three. By determining that the number of remaining bins 112 exceeds this threshold, the method proceeds to step S508 where the control system identifies the second subset of bins 112. Alternatively, if the number of remaining bins 112 does not exceed the threshold (e.g., if the bin 112 corresponding to the unavailable item was the last bin 112 delivered to the port 130, 132 for that order, or if only one bin 112 remains for delivery to the port 130, 132), then the method 700 may simply end without selecting a bin 112 storing the item or a substitute item. In this case, the item is simply omitted from the order.

At S706, after step S508 has been carried out, the control system determines the parameter values at S510 by determining whether one or more of the second subset of bins 112 stores the item or a substitute item for the item.

In response to determining at S706 that one of the second subset of bins 112 stores the item, the control system carries out the selection at S512 by selecting, at S708, a bin 112 storing the item from the second subset of bins 112. If more than one of the bins 112 in the second subset of bins 112 stores the item, then the control system may select, at S708, the bin 112 having the lowest estimated delivery time to the port 130, 132 (if the determined parameter values also include the estimated time to deliver the bin 112 to the port 130, 132). Alternatively, the control system may select a bin 112 at random from the multiple bins 112 in the second subset that store the item, thereby removing the need to calculate estimated delivery times for the bins 112 in the second subset of bins 112.

If one of the second subset of bins 112 does not store the item, then the control system proceeds to consider bins 112 storing substitute items for the item. For example, the selection of the bin 112 at S512 may involve selecting, from the second subset of bins 112, a bin 112 storing a substitute item for the item. This selection of a substitute item may also account for the priority values of the substitute items in the bins 112 (e.g., using the method of Fig. 8 described below).

By considering the threshold number of bins 112, the control system may be capable of determining that the number of remaining bins is sufficiently high that there is enough time to retrieve a bin 112 storing the item or the highest ranked substitute item for the item. In this case, system throughput is ensured because the number of bins 112 remaining for delivery to the port 130, 132 is high enough that time or location constraints do not need to be considered. In addition, by determining the parameter value of whether the bin 112 stores the item or a substitute item for the item, customer preference for the item itself can be accounted for when selecting the bin 112.

### Bin selection based on priority values

Fig. 8 is a flowchart of a method 800 carried out by the control system in order to carry out steps S510 and S512 of the method 500. In the method 800, the one or more parameter values associated with each bin 112 in the second subset of bins 112 include: the priority value of a substitute item stored in the bin 112, if the bin 112 stores a substitute item; an identification of whether the bin 112 stores the item or a substitute item for the item; and, optionally, the estimated time to deliver the bin 112 to the port 130, 132. If a bin 112 does not store a substitute item, it can be assigned a priority value that is higher that the priority value of the highest ranked substitute item. In this case, the one or more parameter values may not necessarily include the identification of whether the bin 112 stores the item or a substitute item for the item (i.e., because such information is captured by the priority values).

At S802, the control system determines the parameter values at S510 by determining, for each bin 112 in the second subset of bins 112 that stores a substitute item, a priority value of the substitute item stored in the bin 112. As mentioned above, the control system may also determine a priority value for each bin 112 in the second subset of bins 112 that stores the item, in which case the priority value will be higher than the highest ranked substitute item. Alternatively, the control system may further determine the parameter values at S510 by identifying whether each bin 112 in the second subset of bins 112 stores the item or a substitute item for the item.

At S804, the control system determines whether the bin 112 that is to be selected from the second subset of bins 112 will be delivered to a port 130, 132. As mentioned above, the selected bin 112 may be delivered to the port 130, 132 at S516 (i.e., if the item is being added to the other items in the order at the port 130, 132), or delivered to a separate substitute selection station at S518 (i.e., if the item is being added to the other items in the order at later time).

If the bin 112 is not being delivered to the port 130, 132, then the method 600 proceeds to S814. In this case, a bin 112 storing the item itself or the highest priority substitute item may be selected at S512, because the time constraint of delivering the bin 112 to the port 130, 132 so that an item or substitute item can be added to other items in the order is not present.

If the bin 112 is being delivered to the port 130, 132, then the time constraint of delivering the bin 112 to the port 130, 132 so that an item or substitute item can be added to other items in the order is present. In this case, the method proceeds to S806.

At S806, the control system optionally determines that the number of remaining bins 112 is greater than or equal to a threshold number of bins 112. In this case, the method may either proceed to S814 or to S808. The method may proceed to S814 if the number of remaining bins 112 is sufficiently high that there is enough time to retrieve a bin 112 storing the item or the highest ranked substitute item. By proceeding to S814, the requirement to calculate estimated times to deliver bins 112 to the port 130, 132 is removed. Alternatively, the method may proceed to S808 so that a threshold time period (such as the estimated order completion time) can additionally be factored in. This may be appropriate, for example, for more time-sensitive order processing. If the number of remaining bins 112 does not exceed the threshold, then the method 800 may simply end without selecting a bin 112 storing the item or a substitute item. In this case, the item is simply omitted from the order.

Alternatively, at S806, the control system may determine whether the number of remaining bins 112 is greater than or equal to a threshold number of bins 112, and proceed to S814 if the determination is positive, or S808 if the determination is negative. In this case, the threshold number of bins 112 can be used as a coarse filter to identify whether the number of remaining bins 112 is sufficiently high that there is enough time to retrieve a bin 112 storing the item or the highest ranked substitute item (S814), or whether the estimated time to deliver each bin 112 to the port 130, 132 should additionally be considered (S808). Multiple threshold numbers of bins 112 may also be implemented at S806. For example, a first threshold number of bins 112 (e.g., two bins) may be used to determine whether the method 800 ends without selection of a bin 112 storing the item or a substitute item, while a second, higher threshold number of bins 112 may be used to determine whether the method 800 proceeds to S808 or to S814.

At S808, the control system further determines the parameter values at S510 by determining, for each bin 112 in the second subset of bins 112, an estimated time to deliver the bin 112 to the port 130, 132 (e.g., in the same way as at S602 of method 600).

At S810, the control system determines a threshold time period (such as the estimated order completion time), in the same way as at S604 of method 600.

At S812, the control system identifies multiple bins 112 for which the estimated time to deliver the bin 112 to the port 130, 132 determined at S808 is less than the threshold time period determined at S810, in the same way as at S606 of method 600. If there is only one bin 112 for which the estimated time to deliver the bin 112 to the port 130, 132 is less than the threshold time period, then that bin 112 is selected at S512. In addition, if there are no bins 112 for which the estimated time to deliver the bin 112 to the port 130, 132 is less than the threshold time period, then the method 800 may either return to S810 where the threshold time period can be increased, or the item can be omitted from the order.

At S814, the control system determines whether one or more of the second subset of bins 112 or one or more of the identified multiple bins 112 stores the item. The control system determines whether one or more of the second subset of bins 112 stores the item if the method 800 proceeds directly from S804 to S814 or if the method proceeds directly from S806 to S814. The control system determines whether one or more of the identified multiple bins 112 stores the item if multiple bins 112 are identified at S812. The determination at S814 may be based on the priority values of the bins 112 in the second subset of bins 112 or the identified multiple bins 112, if priority values are assigned to bins 112 storing the item at S802. Alternatively, the determination at S814 may be based on the identification of whether the bins 112 in the second subset of bins 112 or the identified multiple bins 112 store the item or a substitute item for the item.

If it is determined at S814 that one or more of the second subset of bins 112 or one or more of the identified multiple bins 112 stores the item, then a bin 112 storing the item is selected at S816 in the same way as at S610 (for selection of a bin 112 from the multiple bins 112 identified at S812), or in the same way as at S708 (for selection of a bin 112 from the second subset of bins 112).

If it is determined at S814 that one or more of the second subset of bins 112 or one or more of the identified multiple bins 112 does not store the item, then a bin 112 storing the highest ranked substitute item is selected from the identified multiple bins 112 or the second subset of bins 112 at S818 based on the priority values determined at S802. If more than one of the bins 112 identified at S812 stores the highest ranked substitute item out of the bins 112 in the identified multiple bins 112, then the control system may select, at S818, the bin 112 having the lowest estimated delivery time to the port 130, 132 (i.e., using the estimated delivery times calculated at S808). Likewise, if more than one of the bins 112 in the second subset of bins 112 stores the highest ranked substitute item out of the bins 112 in the second subset of bins 112, then the control system may select, at S818, the bin 112 having the lowest estimated delivery time to the port 130, 132 (if the determined parameter values also include the estimated time to deliver the bin 112 to the port 130, 132). Alternatively, the control system may select a bin 112 at random from the multiple bins 112 in the second subset that store the item, thereby removing the need to calculate estimated delivery times for the bins 112 in the second subset of bins 112.

By determining the parameter value of the priority value of substitute items (and optionally the item itself) in the bin 112, and optionally the parameter value of whether the bin 112 stores the item or a substitute item for the item, customer preference for the item itself or the most preferred substitute item can be accounted for when selecting the bin 112. In addition, by determining the parameter value of the estimated time to deliver bins 112 in the second subset of bins 112 to the port 130, 132, a bin 112 can be selected at S818 so that system throughput is maintained if needed (i.e., by avoiding or minimising delay at the port 130, 132 if the selected bin 112 is to be delivered to the port 130, 132).

### Alternative parameter values

As an alternative to calculating the estimated time to deliver each bin 112 in the second subset of bins 112 to the port 130, 132 in the methods of Figs. 6 to 8, the control system may alternatively (or additionally) determine, as a parameter value of each bin 112 in the second subset, the location of each bin 112 in the grid 100. The location of a bin 112 may include the position of the bin 112 in the Z direction 114 and optionally in the X direction 108 and/or Y direction 110 (with reference to the coordinate system shown in Fig. 1). Alternatively or additionally, the location of a bin 112 may include an indication of the number of bins 112 stacked on top of the bin 112.

Where the location of the bin 112 in the grid 100 is considered as an alternative to, or in addition to, the estimated time to deliver the bin 112 to the port 130, 132, the method 600 may alternatively or additionally determine a location-based threshold at S604 and evaluate the locations of the bins 112 in the second subset of bins 112 against the location-based threshold at S606. For example, the location-based threshold may be a specified depth (i.e., in the Z direction 114) within the grid 100, such as a depth in the Z direction of no more than three bins 112. Threshold values in the X direction 108 and the Y direction 110 may also be used. Alternatively or additionally, the location-based threshold may specify a maximum number of bins 112 that are to be stacked on top of the bin 112. For example, the location-based threshold may specify that the maximum number of bins 112 that are to be stacked on top of the bin 112 is two. One or more location-based thresholds may also be used in the method 800 in addition to, or as an alternative to, the threshold time period.

As mentioned above, the one or more parameter values determined at S510 may also include an identification of whether the bin 112 is scheduled for delivery to the port 130, 132 in order to deliver an item in a different order that is being simultaneously processed at the port 130, 132. This parameter value recognises that, in some cases, multiple orders are processed in parallel at the port 130, 132. Therefore, if a bin 112 storing the item or a substitute item for the item is being subsequently delivered to the port 130, 132, then the item or substitute item could simply be picked from that bin 112.

A time-based or location-based threshold can also be used in conjunction with the parameter value of the identification of whether the bin 112 is scheduled for delivery to the port 130, 132 in order to deliver an item in a different order that is being simultaneously processed at the port 130, 132. For example, a bin 112 may be selected from the second subset of bins 112 if it is being delivered to the port 130, 132 in order to deliver an item in a different order that is being simultaneously processed, and if the delivery of that bin 112 to the port 130, 132 is less than a threshold time period such as the estimated order completion time (or a location-based threshold).

If the bin 112 that is scheduled for delivery to the port 130, 132 in order to deliver an item in a different, simultaneously processed order is a substitute item for the item determined to be unavailable at S506, then the control system may establish whether a higher-priority item or the item itself can be delivered to the port 130, 132 within a threshold time period such as the estimated order completion time (or a location-based threshold). For example, the control system may carry out steps S808 to S818 of method 800, but only for bins 112 in the second subset of bins 112 that store items or substitute items with a priority value exceeding the priority value of the substitute item in the bin 112 scheduled for delivery to the port 130, 132 for processing the other order, and/or for bins 112 having a parameter value identifying that they store the item and not a substitute item. If a bin 112 storing a higher-priority substitute item or the item itself cannot be found, then the bin 112 scheduled for delivery to the port 130, 132 for processing the other order can be selected at S512.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

The following paragraphs are intended to demonstrate that certain features may be included together with other features in one or more embodiments of the disclosed invention. These are merely meant to be explicit examples of combinations of features and not an exhaustive list.

In one or more embodiments, the present invention relates to an automated storage and retrieval system comprising: a plurality of storage locations, each of the plurality of storage locations being configured to store a respective one of a plurality of storage containers, each of the plurality of storage containers being configured to store one or more items; one or more robotic container-handling vehicles configured to deliver storage containers from the plurality of storage locations to a packing station; and a control system configured to: receive an order for one or more items stored in one or more of the plurality of storage containers; identify a first subset of storage containers from the plurality of storage containers, wherein each of the first subset of storage containers stores one of the one or more items in the order; determine that an item in a storage container of the first subset of storage containers is unavailable; identify a second subset of storage containers from the plurality of storage containers, wherein each of the second subset of storage containers stores the item or a substitute item for the item; determine, for each of the second subset of storage containers, one or more parameter values associated with the storage container; select a storage container from the second subset of storage containers based on the parameter values associated with the second subset of storage containers; and order a robotic container-handling vehicle of the one or more robotic container-handling vehicles to retrieve the selected storage container.

The order may identify one or more substitute items for the item or the order may identify the one or more substitute items in order of priority, and wherein the one or more parameter values associated with the storage container comprises a priority value of a substitute item stored in the storage container. In any embodiment, the one or more parameter values associated with the storage container comprises an estimated time to deliver the storage container to the packing station.

The selecting of the storage container from the second subset of storage containers may comprise selecting, from the second subset of storage containers, a storage container for which the estimated time to deliver the storage container to the packing station is less than a threshold time period; and wherein the control system may be optionally further configured to: determine an estimated order completion time, wherein the estimated order completion time is the time to complete delivery of the first subset of storage containers to the packing station. The threshold time period may be optionally the estimated order completion time. The selecting of the storage container from the second subset of storage containers may further comprise: identifying multiple storage containers for which the estimated time to deliver the storage container to the packing station is less than the threshold time period; determining whether one or more of the multiple storage containers stores the item; and responsive to determining that one or more of the multiple storage containers stores the item, selecting, from the identified multiple storage containers, a storage container storing the item. The selecting of the storage container from the second subset of storage containers may further comprise: responsive to determining that none of the multiple storage containers stores the item, selecting, from the identified multiple storage containers, a storage container storing the substitute item with the highest priority value.

In any embodiment, the selecting of the storage container from the second subset of storage containers may comprise: determining a number of remaining storage containers required to complete delivery of the first subset of storage containers to the packing station; responsive to determining that the number of remaining storage containers is greater than or equal to a threshold number of storage containers: determining whether one or more of the second subset of storage containers stores the item; responsive to determining that one or more of the second subset of storage containers stores the item, selecting, from the second subset of storage containers, a storage container storing the item. The one or more parameter values associated with the storage container may comprise a location of the storage container within the plurality of storage locations. The order may be a first order, and the one or more robotic container-handling vehicles are configured to simultaneously deliver, to the packing station: storage containers storing items in the first order; and storage containers storing items in a second order; wherein the one or more parameter values associated with the storage container comprises a value indicating whether the storage container is scheduled for delivery to the packing station in order to deliver one or more items in the second order to the packing station.

In any embodiment, the control system may be configured to order the robotic container-handling vehicle to deliver the retrieved storage container to a substitute selection station different to the packing station, and wherein selecting the storage container from the second subset of storage containers comprises: determining whether one or more of the second subset of storage containers stores the item; responsive to determining that one or more of the second subset of storage containers stores the item, selecting, from the second subset of storage containers, a storage container storing the item. The selecting of the storage container from the second subset of storage containers may comprise: responsive to determining that none of the second subset of storage containers stores the item, selecting, from the second subset of storage containers, a storage container storing the substitute item with the highest priority value.

In any embodiment, the determining that the item in the storage container of the first subset of storage containers is unavailable may comprise one or more of: receiving an indication from a user that the item is unavailable; and receiving an indication from a robotic container-handling vehicle of the one or more robotic container-handling vehicle that the item is unavailable; or determining that the item in the storage container of the first subset of storage containers is unavailable comprises determining that a storage location storing a storage container of the first subset of storage containers is inaccessible.

In one or more embodiments, the present invention relates to a method of controlling one or more robotic container-handling vehicles in an automated storage and retrieval system, the system comprising: a plurality of storage locations, each of the plurality of storage locations being configured to store a respective one of a plurality of storage containers, each of the plurality of storage containers being configured to store one or more items; and one or more robotic container-handling vehicles configured to deliver storage containers from the plurality of storage locations to a packing station; wherein the method comprises: receiving an order for one or more items stored in one or more of the plurality of storage containers; identifying a first subset of storage containers from the plurality of storage containers, wherein each of the first subset of storage containers stores one of the one or more items in the order; determining that an item in a storage container of the first subset of storage containers is unavailable; identifying a second subset of storage containers from the plurality of storage containers, wherein each of the second subset of storage containers stores the item or a substitute item for the item; determining, for each of the second subset of storage containers, one or more parameter values associated with the storage container; selecting a storage container from the second subset of storage containers based on the parameter values associated with the second subset of storage containers; and ordering a robotic container-handling vehicle of the one or more robotic container-handling vehicles to retrieve the selected storage container.

In one or more embodiments, the present invention relates to a computer-readable medium storing instructions that, when executed by one or more processors of a control system of an automated storage and retrieval system according to any of the above-described embodiments, cause the control system to: receive an order for one or more items stored in one or more of a plurality of storage containers; identify a first subset of storage containers from the plurality of storage containers, wherein each of the first subset of storage containers stores one of the one or more items in the order; determine that an item in a storage container of the first subset of storage containers is unavailable; identify a second subset of storage containers from the plurality of storage containers, wherein each of the second subset of storage containers stores the item or a substitute item for the item; determine, for each of the second subset of storage containers, one or more parameter values associated with the storage container; select a storage container from the second subset of storage containers based on the parameter values associated with the second subset of storage containers; and order a robotic container-handling vehicle of one or more robotic container-handling vehicles to retrieve the selected storage container.

## Claims

1. An automated storage and retrieval system comprising:
a plurality of storage locations, each of the plurality of storage locations being configured to store a respective one of a plurality of storage containers, each of the plurality of storage containers being configured to store one or more items;
one or more robotic container-handling vehicles configured to deliver storage containers from the plurality of storage locations to a packing station; and
a control system configured to:
receive an order for one or more items stored in one or more of the plurality of storage containers;
identify a first subset of storage containers from the plurality of storage containers, wherein each of the first subset of storage containers stores one of the one or more items in the order;
determine that an item in a storage container of the first subset of storage containers is unavailable;
identify a second subset of storage containers from the plurality of storage containers, wherein each of the second subset of storage containers stores the item or a substitute item for the item;
determine, for each of the second subset of storage containers, one or more parameter values associated with the storage container;
select a storage container from the second subset of storage containers based on the parameter values associated with the second subset of storage containers; and
order a robotic container-handling vehicle of the one or more robotic container-handling vehicles to retrieve the selected storage container;
wherein the one or more parameter values associated with the storage container comprises an estimated time to deliver the storage container to the packing station;
wherein selecting the storage container from the second subset of storage containers comprises selecting, from the second subset of storage containers, a storage container for which the estimated time to deliver the storage container to the packing station is less than a threshold time period; and
wherein the control system is further configured to:
determine an estimated order completion time, wherein the estimated order completion time is the time to complete delivery of the first subset of storage containers to the packing station;
wherein the threshold time period is the estimated order completion time.

2. The system according to claim 1, wherein the order identifies one or more substitute items for the item.

3. The system according to claim 2, wherein the order identifies the one or more substitute items in order of priority, and wherein the one or more parameter values associated with the storage container comprises a priority value of a substitute item stored in the storage container.

4. The system according to any of claims 1 to 3, wherein selecting the storage container from the second subset of storage containers further comprises:
identifying multiple storage containers for which the estimated time to deliver the storage container to the packing station is less than the threshold time period;
determining whether one or more of the multiple storage containers stores the item; and
responsive to determining that one or more of the multiple storage containers stores the item, selecting, from the identified multiple storage containers, a storage container storing the item.

5. The system according to claim 4 when dependent on claim 3, wherein selecting the storage container from the second subset of storage containers further comprises:
responsive to determining that none of the multiple storage containers stores the item, selecting, from the identified multiple storage containers, a storage container storing the substitute item with the highest priority value.

6. The system according to any of claims 1 to 3, wherein selecting the storage container from the second subset of storage containers comprises:
determining a number of remaining storage containers required to complete delivery of the first subset of storage containers to the packing station;
responsive to determining that the number of remaining storage containers is greater than or equal to a threshold number of storage containers:
determining whether one or more of the second subset of storage containers stores the item;
responsive to determining that one or more of the second subset of storage containers stores the item, selecting, from the second subset of storage containers, a storage container storing the item.

7. The system according to any of claims 1 to 6, wherein the one or more parameter values associated with the storage container comprises a location of the storage container within the plurality of storage locations.

8. The system according to any of claims 1 to 7, wherein the order is a first order, and wherein the one or more robotic container-handling vehicles are configured to simultaneously deliver, to the packing station:
storage containers storing items in the first order; and
storage containers storing items in a second order;
wherein the one or more parameter values associated with the storage container comprises a value indicating whether the storage container is scheduled for delivery to the packing station in order to deliver one or more items in the second order to the packing station.

9. The system according to any of claims 1 to 8, wherein the control system is configured to order the robotic container-handling vehicle to deliver the retrieved storage container to a substitute selection station different to the packing station, and wherein selecting the storage container from the second subset of storage containers comprises:
determining whether one or more of the second subset of storage containers stores the item;
responsive to determining that one or more of the second subset of storage containers stores the item, selecting, from the second subset of storage containers, a storage container storing the item.

10. The system according to claim 6 or claim 9 when dependent on claim 3, wherein selecting the storage container from the second subset of storage containers comprises:
responsive to determining that none of the second subset of storage containers stores the item, selecting, from the second subset of storage containers, a storage container storing the substitute item with the highest priority value.

11. The system according to any of claims 1 to 10, wherein:
determining that the item in the storage container of the first subset of storage containers is unavailable comprises one or more of:
receiving an indication from a user that the item is unavailable; and
receiving an indication from a robotic container-handling vehicle of the one or more robotic container-handling vehicle that the item is unavailable; or
determining that the item in the storage container of the first subset of storage containers is unavailable comprises determining that a storage location storing a storage container of the first subset of storage containers is inaccessible..

12. A method of controlling one or more robotic container-handling vehicles in an automated storage and retrieval system, the system comprising:
a plurality of storage locations, each of the plurality of storage locations being configured to store a respective one of a plurality of storage containers, each of the plurality of storage containers being configured to store one or more items; and
one or more robotic container-handling vehicles configured to deliver storage containers from the plurality of storage locations to a packing station;
wherein the method comprises:
receiving an order for one or more items stored in one or more of the plurality of storage containers;
identifying a first subset of storage containers from the plurality of storage containers, wherein each of the first subset of storage containers stores one of the one or more items in the order;
determining that an item in a storage container of the first subset of storage containers is unavailable;
identifying a second subset of storage containers from the plurality of storage containers, wherein each of the second subset of storage containers stores the item or a substitute item for the item;
determining, for each of the second subset of storage containers, one or more parameter values associated with the storage container;
selecting a storage container from the second subset of storage containers based on the parameter values associated with the second subset of storage containers; and
ordering a robotic container-handling vehicle of the one or more robotic container-handling vehicles to retrieve the selected storage container;
wherein the one or more parameter values associated with the storage container comprises an estimated time to deliver the storage container to the packing station;
wherein selecting the storage container from the second subset of storage containers comprises selecting, from the second subset of storage containers, a storage container for which the estimated time to deliver the storage container to the packing station is less than a threshold time period; and
wherein the method further comprises:
determining an estimated order completion time, wherein the estimated order completion time is the time to complete delivery of the first subset of storage containers to the packing station;
wherein the threshold time period is the estimated order completion time.

13. A computer-readable medium storing instructions that, when executed by one or more processors of a control system of an automated storage and retrieval system according to any of claims 1 to 11, cause the control system to:
receive an order for one or more items stored in one or more of a plurality of storage containers;
identify a first subset of storage containers from the plurality of storage containers, wherein each of the first subset of storage containers stores one of the one or more items in the order;
determine that an item in a storage container of the first subset of storage containers is unavailable;
identify a second subset of storage containers from the plurality of storage containers, wherein each of the second subset of storage containers stores the item or a substitute item for the item;
determine, for each of the second subset of storage containers, one or more parameter values associated with the storage container;
select a storage container from the second subset of storage containers based on the parameter values associated with the second subset of storage containers; and
order a robotic container-handling vehicle of one or more robotic container-handling vehicles to retrieve the selected storage container;
wherein the one or more parameter values associated with the storage container comprises an estimated time to deliver the storage container to the packing station;
wherein selecting the storage container from the second subset of storage containers comprises selecting, from the second subset of storage containers, a storage container for which the estimated time to deliver the storage container to the packing station is less than a threshold time period; and
wherein the instructions, when so executed, further cause the control system to:
determine an estimated order completion time, wherein the estimated order completion time is the time to complete delivery of the first subset of storage containers to the packing station;
wherein the threshold time period is the estimated order completion time.

## Patentansprüche

1. Automatisiertes Lager- und Entnahmesystem, umfassend:
mehrere Lagerorte, wobei jeder der mehreren Lagerorte dazu ausgelegt ist, einen jeweiligen von mehreren Lagerbehälter zu lagern, wobei jeder der mehreren Lagerbehälter dazu ausgelegt ist, einen oder mehrere Gegenstände zu lagern;
ein oder mehrere robotische Behälterhandhabungsfahrzeuge, die dazu ausgelegt sind, Lagerbehälter von den mehreren Lagerorten an eine Verpackungsstation zu liefern; und
ein Steuersystem, das ausgelegt ist zum:
Empfangen einer Bestellung für einen oder mehrere Gegenstände, die in einem oder mehreren der mehreren Lagerbehälter gelagert sind;
Identifizieren einer ersten Teilmenge von Lagerbehältern aus den mehreren Lagerbehältern, wobei jeder der ersten Teilmenge von Lagerbehältern einen des einen oder der mehreren Gegenstände in der Bestellung lagert;
Bestimmen, dass ein Gegenstand in einem Lagerbehälter der ersten Teilmenge von Lagerbehältern nicht verfügbar ist;
Identifizieren einer zweiten Teilmenge von Lagerbehältern aus den mehreren Lagerbehältern, wobei jeder der zweiten Teilmenge von Lagerbehältern den Gegenstand oder einen Ersatzgegenstand für den Gegenstand lagert;
Bestimmen, für jeden der zweiten Teilmenge von Lagerbehältern, eines oder mehrerer Parameterwerte, die mit dem Lagerbehälter assoziiert sind;
Auswählen eines Lagerbehälters aus der zweiten Teilmenge von Lagerbehältern basierend auf den Parameterwerten, die mit der zweiten Teilmenge von Lagerbehältern assoziiert sind; und
Anweisen eines robotischen Behälterhandhabungsfahrzeugs des einen oder der mehreren robotischen Behälterhandhabungsfahrzeuge, den ausgewählten Lagerbehälter zu entnehmen;
wobei der eine oder die mehreren Parameterwerte, die mit dem Lagerbehälter assoziiert sind, eine geschätzte Zeit zum Liefern des Lagerbehälters an die Verpackungsstation umfassen;
wobei das Auswählen des Lagerbehälters aus der zweiten Teilmenge von Lagerbehältern das Auswählen, aus der zweiten Teilmenge von Lagerbehältern, eines Lagerbehälters umfasst, für den die geschätzte Zeit zum Liefern des Lagerbehälters an die Verpackungsstation kleiner als ein Schwellenzeitraum ist; und
wobei das Steuersystem ferner ausgelegt ist zum:
Bestimmen einer geschätzten Bestellungsabschlusszeit, wobei die geschätzte Bestellungsabschlusszeit die Zeit ist, um die Lieferung der ersten Teilmenge von Lagerbehältern an die Verpackungsstation abzuschließen;
wobei der Schwellenzeitraum die geschätzte Bestellungsabschlusszeit ist.

2. System nach Anspruch 1, wobei die Bestellung einen oder mehrere Ersatzgegenstände für den Gegenstand identifiziert.

3. System nach Anspruch 2, wobei die Bestellung den einen oder die mehreren Ersatzgegenstände in Prioritätsreihenfolge identifiziert und wobei der eine oder die mehreren Parameterwerte, die mit dem Lagerbehälter assoziiert sind, einen Prioritätswert eines in dem Lagerbehälter gelagerten Ersatzgegenstands umfassen.

4. System nach einem der Ansprüche 1 bis 3, wobei das Auswählen des Lagerbehälters aus der zweiten Teilmenge von Lagerbehältern ferner Folgendes umfasst:
Identifizieren mehrerer Lagerbehälter, für die die geschätzte Zeit zum Liefern des Lagerbehälters an die Verpackungsstation kleiner als der Schwellenzeitraum ist;
Bestimmen, ob einer oder mehrere der mehreren Lagerbehälter den Gegenstand lagern; und
als Reaktion auf das Bestimmen, dass einer oder mehrere der mehreren Lagerbehälter den Gegenstand lagern, Auswählen, aus den identifizierten mehreren Lagerbehältern, eines Lagerbehälters, der den Gegenstand lagert.

5. System nach Anspruch 4, wenn abhängig von Anspruch 3, wobei das Auswählen des Lagerbehälters aus der zweiten Teilmenge von Lagerbehältern ferner Folgendes umfasst: als Reaktion auf das Bestimmen, dass keiner der mehreren Lagerbehälter den Gegenstand lagert, Auswählen, aus den identifizierten mehreren Lagerbehältern, eines Lagerbehälters, der den Ersatzgegenstand mit dem höchsten Prioritätswert lagert.

6. System nach einem der Ansprüche 1 bis 3, wobei das Auswählen des Lagerbehälters aus der zweiten Teilmenge von Lagerbehältern Folgendes umfasst:
Bestimmen einer Anzahl von verbleibenden Lagerbehältern, die erforderlich sind, um die Lieferung der ersten Teilmenge von Lagerbehältern an die Verpackungsstation abzuschließen;
als Reaktion auf das Bestimmen, dass die Anzahl der verbleibenden Lagerbehälter größer oder gleich einer Schwellenanzahl von Lagerbehältern ist:
Bestimmen, ob einer oder mehrere der zweiten Teilmenge von Lagerbehältern den Gegenstand lagern;
als Reaktion auf das Bestimmen, dass einer oder mehrere der zweiten Teilmenge von Lagerbehältern den Gegenstand lagern, Auswählen, aus der zweiten Teilmenge von Lagerbehältern, eines Lagerbehälters, der den Gegenstand lagert.

7. System nach einem der Ansprüche 1 bis 6, wobei der eine oder die mehreren Parameterwerte, die mit dem Lagerbehälter assoziiert sind, einen Ort des Lagerbehälters innerhalb der mehreren Lagerorte umfassen.

8. System nach einem der Ansprüche 1 bis 7, wobei die Bestellung eine erste Bestellung ist und wobei das eine oder die mehreren robotischen Behälterhandhabungsfahrzeuge dazu ausgelegt sind, gleichzeitig an die Verpackungsstation Folgendes zu liefern:
Lagerbehälter, in denen Gegenstände in der ersten Bestellung gelagert werden; und
Lagerbehälter, die Gegenstände in einer zweiten Bestellung lagern;
wobei der eine oder die mehreren Parameterwerte, die mit dem Lagerbehälter assoziiert sind, einen Wert umfassen, der angibt, ob der Lagerbehälter zur Lieferung an die Verpackungsstation geplant ist, um ein oder mehrere Gegenstände in der zweiten Bestellung an die Verpackungsstation zu liefern.

9. System nach einem der Ansprüche 1 bis 8, wobei das Steuersystem dazu ausgelegt ist, das robotische Behälterhandhabungsfahrzeug anzuweisen, den entnommenen Lagerbehälter an eine Ersatzauswahlstation zu liefern, die sich von der Verpackungsstation unterscheidet, und wobei das Auswählen des Lagerbehälters aus der zweiten Teilmenge von Lagerbehältern Folgendes umfasst:
Bestimmen, ob einer oder mehrere der zweiten Teilmenge von Lagerbehältern den Gegenstand lagern;
als Reaktion auf das Bestimmen, dass einer oder mehrere der zweiten Teilmenge von Lagerbehältern den Gegenstand lagern, Auswählen, aus der zweiten Teilmenge von Lagerbehältern, eines Lagerbehälters, der den Gegenstand lagert.

10. System nach Anspruch 6 oder Anspruch 9, wenn abhängig von Anspruch 3, wobei das Auswählen des Lagerbehälters aus der zweiten Teilmenge von Lagerbehältern Folgendes umfasst:
als Reaktion auf das Bestimmen, dass keiner der zweiten Teilmenge von Lagerbehältern den Gegenstand lagert, Auswählen, aus der zweiten Teilmenge von Lagerbehältern, eines Lagerbehälters, der den Ersatzgegenstand mit dem höchsten Prioritätswert lagert.

11. System nach einem der Ansprüche 1 bis 10, wobei:
das Bestimmen, dass der Gegenstand in dem Lagerbehälter der ersten Teilmenge von Lagerbehältern nicht verfügbar ist, eines oder mehrere von Folgendem umfasst:
Empfangen einer Angabe von einem Benutzer, dass der Gegenstand nicht verfügbar ist; und
Empfangen einer Angabe von einem robotischen Behälterhandhabungsfahrzeug des einen oder der mehreren robotischen Behälterhandhabungsfahrzeuge, dass der Gegenstand nicht verfügbar ist; oder
das Bestimmen, dass der Gegenstand in dem Lagerbehälter der ersten Teilmenge von Lagerbehältern nicht verfügbar ist, das Bestimmen umfasst, dass ein Lagerort, der einen Lagerbehälter der ersten Teilmenge von Lagerbehältern lagert, nicht zugänglich ist.

12. Verfahren zum Steuern eines oder mehrerer robotischer Behälterhandhabungsfahrzeuge in einem automatisierten Lager- und Entnahmesystem, wobei das System Folgendes umfasst:
mehrere Lagerorte, wobei jeder der mehreren Lagerorte dazu ausgelegt ist, einen jeweiligen von mehreren Lagerbehältern zu lagern, wobei jeder der mehreren Lagerbehälter dazu ausgelegt ist, einen oder mehrere Gegenstände zu lagern; und
ein oder mehrere robotische Behälterhandhabungsfahrzeuge, die dazu ausgelegt sind, Lagerbehälter von den mehreren Lagerorten an eine Verpackungsstation zu liefern;
wobei das Verfahren umfasst:
Empfangen einer Bestellung für ein oder mehrere Gegenstände, die in einem oder mehreren der mehreren Lagerbehälter gelagert sind;
Identifizieren einer ersten Teilmenge von Lagerbehältern aus den mehreren Lagerbehältern, wobei jeder der ersten Teilmenge von Lagerbehältern einen des einen oder der mehreren Gegenstände in der Bestellung lagert;
Bestimmen, dass ein Gegenstand in einem Lagerbehälter der ersten Teilmenge von Lagerbehältern nicht verfügbar ist;
Identifizieren einer zweiten Teilmenge von Lagerbehältern aus den mehreren Lagerbehältern, wobei jeder der zweiten Teilmenge von Lagerbehältern den Gegenstand oder einen Ersatzgegenstand für den Gegenstand lagert;
Bestimmen, für jeden der zweiten Teilmenge von Lagerbehältern, eines oder mehrerer Parameterwerte, die mit dem Lagerbehälter assoziiert sind;
Auswählen eines Lagerbehälters aus der zweiten Teilmenge von Lagerbehältern basierend auf den Parameterwerten, die mit der zweiten Teilmenge von Lagerbehältern assoziiert sind; und
Anweisen eines robotischen Behälterhandhabungsfahrzeugs des einen oder der mehreren robotischen Behälterhandhabungsfahrzeuge, den ausgewählten Lagerbehälter zu entnehmen;
wobei der eine oder die mehreren Parameterwerte, die mit dem Lagerbehälter assoziiert sind, eine geschätzte Zeit zum Liefern des Lagerbehälters an die Verpackungsstation umfassen;
wobei das Auswählen des Lagerbehälters aus der zweiten Teilmenge von Lagerbehältern das Auswählen, aus der zweiten Teilmenge von Lagerbehältern, eines Lagerbehälters umfasst, für den die geschätzte Zeit zum Liefern des Lagerbehälters an die Verpackungsstation kleiner als ein Schwellenzeitraum ist; und
wobei das Verfahren ferner umfasst:
Bestimmen einer geschätzten Bestellungsabschlusszeit, wobei die geschätzte Bestellungsabschlusszeit die Zeit ist, um die Lieferung der ersten Teilmenge von Lagerbehältern an die Verpackungsstation abzuschließen;
wobei der Schwellenzeitraum die geschätzte Bestellungsabschlusszeit ist.

13. Computerlesbares Medium, das Anweisungen speichert, die, wenn sie durch einen oder mehrere Prozessoren eines Steuersystems eines automatisierten Lager- und Entnahmesystems nach einem der Ansprüche 1 bis 11 ausgeführt werden, das Steuersystem veranlassen zum:
Empfangen einer Bestellung für einen oder mehrere Gegenstände, die in einem oder mehreren von mehreren Lagerbehälter gelagert sind;
Identifizieren einer ersten Teilmenge von Lagerbehältern aus den mehreren Lagerbehältern, wobei jeder der ersten Teilmenge von Lagerbehältern einen des einen oder der mehreren Gegenstände in der Bestellung lagert;
Bestimmen, dass ein Gegenstand in einem Lagerbehälter der ersten Teilmenge von Lagerbehältern nicht verfügbar ist;
Identifizieren einer zweiten Teilmenge von Lagerbehältern aus den mehreren Lagerbehältern, wobei jeder der zweiten Teilmenge von Lagerbehältern den Gegenstand oder einen Ersatzgegenstand für den Gegenstand lagert;
Bestimmen, für jeden der zweiten Teilmenge von Lagerbehältern, eines oder mehrerer Parameterwerte, die mit dem Lagerbehälter assoziiert sind;
Auswählen eines Lagerbehälters aus der zweiten Teilmenge von Lagerbehältern basierend auf den Parameterwerten, die mit der zweiten Teilmenge von Lagerbehältern assoziiert sind; und
Anweisen eines robotischen Behälterhandhabungsfahrzeugs eines oder mehrerer robotischer Behälterhandhabungsfahrzeuge, den ausgewählten Lagerbehälter zu entnehmen;
wobei der eine oder die mehreren Parameterwerte, die mit dem Lagerbehälter assoziiert sind, eine geschätzte Zeit zum Liefern des Lagerbehälters an die Verpackungsstation umfassen;
wobei das Auswählen des Lagerbehälters aus der zweiten Teilmenge von Lagerbehältern das Auswählen, aus der zweiten Teilmenge von Lagerbehältern, eines Lagerbehälters umfasst, für den die geschätzte Zeit zum Liefern des Lagerbehälters an die Verpackungsstation kleiner als ein Schwellenzeitraum ist; und
wobei die Anweisungen, wenn sie so ausgeführt werden, ferner das Steuersystem veranlassen zum:
Bestimmen einer geschätzten Bestellungsabschlusszeit, wobei die geschätzte Bestellungsabschlusszeit die Zeit ist, um die Lieferung der ersten Teilmenge von Lagerbehältern an die Verpackungsstation abzuschließen;
wobei der Schwellenzeitraum die geschätzte Bestellungsabschlusszeit ist.

## Revendications

1. Système de stockage et de récupération automatisé comprenant :
une pluralité d'emplacements de stockage, chaque emplacement parmi la pluralité d'emplacements de stockage étant configuré pour stocker un conteneur respectif parmi une pluralité de conteneurs de stockage, chaque conteneur parmi la pluralité de conteneurs de stockage étant configuré pour stocker un ou plusieurs articles ;
un ou plusieurs véhicules robotisés de manutention de conteneurs configurés pour livrer des conteneurs de stockage à partir de la pluralité d'emplacements de stockage à un poste d'emballage ; et
un système de commande configuré pour :
recevoir une commande concernant un ou plusieurs articles stockés dans un ou plusieurs conteneurs de stockage parmi la pluralité de conteneurs de stockage ;
identifier un premier sous-ensemble de conteneurs de stockage de la pluralité de conteneurs de stockage, où chacun du premier sous-ensemble de conteneurs de stockage stocke un des un ou plusieurs articles de la commande ;
déterminer qu'un article d'un conteneur de stockage du premier sous-ensemble de conteneurs de stockage est indisponible ;
identifier un deuxième sous-ensemble de conteneurs de stockage de la pluralité de conteneurs de stockage, où chacun du deuxième sous-ensemble de conteneurs de stockage stocke l'article ou un article de substitution à l'article ;
déterminer, pour chacun du deuxième sous-ensemble de conteneurs de stockage, une ou plusieurs valeurs de paramètres associées au conteneur de stockage ;
sélectionner un conteneur de stockage dans le deuxième sous-ensemble de conteneurs de stockage en fonction des valeurs de paramètres associées au deuxième sous-ensemble de conteneurs de stockage ; et
ordonner à un véhicule robotisé de manutention de conteneurs des un ou plusieurs véhicules robotisés de manutention de conteneurs de récupérer le conteneur de stockage sélectionné ;
où les une ou plusieurs valeurs de paramètres associées au conteneur de stockage comprennent une durée estimée pour délivrer le conteneur de stockage au poste d'emballage ;
où la sélection du conteneur de stockage dans le deuxième sous-ensemble de conteneurs de stockage comprend de sélectionner, dans le deuxième sous-ensemble de conteneurs de stockage, un conteneur de stockage pour lequel la durée estimée pour délivrer le conteneur de stockage au poste d'emballage est inférieure à une période de temps seuil ; et
où le système de commande est en outre configuré pour :
déterminer un temps estimé d'achèvement de la commande, où le temps estimé d'achèvement de la commande est le temps nécessaire pour achever la livraison du premier sous-ensemble de conteneurs de stockage au poste d'emballage ;
où la période seuil est le temps estimé d'achèvement de la commande.

2. Système selon la revendication 1, dans lequel la commande identifie un ou plusieurs articles de substitution pour l'article.

3. Système selon la revendication 2, dans lequel la commande identifie les un ou plusieurs articles de substitution par ordre de priorité, et dans lequel les une ou plusieurs valeurs de paramètres associées au conteneur de stockage comprennent une valeur de priorité d'un article de substitution stocké dans le conteneur de stockage.

4. Système selon l'une quelconque des revendications 1 à 3, dans lequel la sélection du conteneur de stockage dans le deuxième sous-ensemble de conteneurs de stockage comprend en outre les étapes suivantes :
identifier plusieurs conteneurs de stockage pour lesquels le temps estimé pour livrer le conteneur de stockage au poste d'emballage est inférieur à la période de temps seuil ;
déterminer si un ou plusieurs des multiples conteneurs de stockage stockent l'article ; et
en réponse à la détermination du fait qu'un ou plusieurs des multiples conteneurs de stockage stockent l'article, sélectionner, parmi les multiples conteneurs de stockage identifiés, un conteneur de stockage contenant l'article.

5. Système selon la revendication 4 lorsqu'elle dépend de la revendication 3, dans lequel la sélection du conteneur de stockage dans le deuxième sous-ensemble de conteneurs de stockage comprend en outre l'étape suivante :
en réponse à la détermination du fait qu'aucun des multiples conteneurs de stockage ne stocke l'article, sélectionner, parmi les multiples conteneurs de stockage identifiés, un conteneur de stockage contenant l'article de remplacement ayant la valeur de priorité la plus élevée.

6. Système selon l'une quelconque des revendications 1 à 3, dans lequel la sélection du conteneur de stockage dans le deuxième sous-ensemble de conteneurs de stockage comprend les étapes suivantes :
déterminer le nombre de conteneurs de stockage restants requis pour achever la livraison du premier sous-ensemble de conteneurs de stockage au poste d'emballage ;
en réponse à la détermination que le nombre de conteneurs de stockage restants est supérieur ou égal à un nombre seuil de conteneurs de stockage :
déterminer si un ou plusieurs du deuxième sous-ensemble de conteneurs de stockage contiennent l'article ;
en réponse à la détermination du fait qu'un ou plusieurs conteneurs de stockage du deuxième sous-ensemble de conteneurs de stockage contiennent l'article, sélectionner, dans le deuxième sous-ensemble de conteneurs de stockage, un conteneur de stockage contenant l'article.

7. Système selon l'une quelconque des revendications 1 à 6, dans lequel les une ou plusieurs valeurs de paramètres associées au conteneur de stockage comprennent un emplacement du conteneur de stockage dans la pluralité d'emplacements de stockage.

8. Système selon l'une quelconque des revendications 1 à 7, dans lequel la commande est une première commande, et dans lequel les un ou plusieurs véhicules robotiques de manutention de conteneurs sont configurés pour délivrer simultanément, au poste d'emballage :
des conteneurs de stockage contenant des articles dans la première commande ; et
des conteneurs de stockage contenant des articles dans une deuxième commande ;
où la ou les valeurs de paramètres associées au conteneur de stockage comprennent une valeur indiquant si le conteneur de stockage est prévu pour une livraison au poste d'emballage afin de livrer un ou plusieurs articles dans la deuxième commande au poste d'emballage.

9. Système selon l'une quelconque des revendications 1 à 8, dans lequel le système de commande est configuré pour ordonner au véhicule robotique de manutention de conteneurs de délivrer le conteneur de stockage récupéré à un poste de sélection de remplacement différent du poste d'emballage, et où la sélection du conteneur de stockage dans le deuxième sous-ensemble de conteneurs de stockage comprend les étapes suivantes :
déterminer si un ou plusieurs du deuxième sous-ensemble de conteneurs de stockage contiennent l'article ;
en réponse à la détermination du fait qu'un ou plusieurs conteneurs de stockage du deuxième sous-ensemble de conteneurs de stockage contiennent l'article, sélectionner, dans le deuxième sous-ensemble de conteneurs de stockage, un conteneur de stockage contenant l'article.

10. Système selon la revendication 6 ou la revendication 9 lorsqu'elle dépend de la revendication 3, dans lequel la sélection du conteneur de stockage dans le deuxième sous-ensemble de conteneurs de stockage comprend l'étape suivante :
en réponse à la détermination qu'aucun du deuxième sous-ensemble de conteneurs de stockage ne stocke l'article, sélectionner, dans le deuxième sous-ensemble de conteneurs de stockage, un conteneur de stockage contenant l'article de remplacement ayant la valeur de priorité la plus élevée.

11. Système selon l'une quelconque des revendications 1 à 10, dans lequel :
la détermination que l'article du conteneur de stockage du premier sous-ensemble de conteneurs de stockage est indisponible comprend l'une ou plusieurs des étapes suivantes :
recevoir une indication d'un utilisateur que l'article n'est pas disponible ; et
recevoir une indication d'un véhicule robotisé de manutention de conteneurs des un ou plusieurs véhicules robotisés de manutention de conteneurs indiquant que l'article n'est pas disponible ; ou
déterminer que l'article du conteneur de stockage du premier sous-ensemble de conteneurs de stockage est indisponible comprend de déterminer qu'un emplacement de stockage contenant un conteneur de stockage du premier sous-ensemble de conteneurs de stockage est inaccessible.

12. Procédé de contrôle d'un ou plusieurs véhicules robotiques de manutention de conteneurs dans un système automatisé de stockage et de récupération, le système comprenant :
une pluralité d'emplacements de stockage, chaque emplacement parmi la pluralité d'emplacements de stockage étant configuré pour stocker un conteneur respectif parmi une pluralité de conteneurs de stockage, chaque conteneur parmi la pluralité de conteneurs de stockage étant configuré pour stocker un ou plusieurs articles ; et
un ou plusieurs véhicules robotisés de manutention de conteneurs configurés pour livrer des conteneurs de stockage à partir de la pluralité d'emplacements de stockage à un poste d'emballage ;
le procédé comprenant les étapes suivantes :
recevoir une commande concernant un ou plusieurs articles stockés dans un ou plusieurs conteneurs de stockage parmi la pluralité de conteneurs de stockage ;
identifier un premier sous-ensemble de conteneurs de stockage de la pluralité de conteneurs de stockage, où chacun du premier sous-ensemble de conteneurs de stockage stocke un des un ou plusieurs articles de la commande ;
déterminer qu'un article d'un conteneur de stockage du premier sous-ensemble de conteneurs de stockage est indisponible ;
identifier un deuxième sous-ensemble de conteneurs de stockage de la pluralité de conteneurs de stockage, où chacun du deuxième sous-ensemble de conteneurs de stockage stocke l'article ou un article de substitution à l'article ;
déterminer, pour chacun du deuxième sous-ensemble de conteneurs de stockage, une ou plusieurs valeurs de paramètres associées au conteneur de stockage ;
sélectionner un conteneur de stockage dans le deuxième sous-ensemble de conteneurs de stockage en fonction des valeurs de paramètres associées au deuxième sous-ensemble de conteneurs de stockage ; et
ordonner à un véhicule robotisé de manutention de conteneurs des un ou plusieurs véhicules robotisés de manutention de conteneurs de récupérer le conteneur de stockage sélectionné ;
où les une ou plusieurs valeurs de paramètres associées au conteneur de stockage comprennent une durée estimée pour délivrer le conteneur de stockage au poste d'emballage ;
où la sélection du conteneur de stockage dans le deuxième sous-ensemble de conteneurs de stockage comprend de sélectionner, dans le deuxième sous-ensemble de conteneurs de stockage, un conteneur de stockage pour lequel la durée estimée pour délivrer le conteneur de stockage au poste d'emballage est inférieure à une période de temps seuil ; et
le procédé comprenant en outre les étapes suivantes :
déterminer un temps estimé d'achèvement de la commande, où le temps estimé d'achèvement de la commande est le temps nécessaire pour achever la livraison du premier sous-ensemble de conteneurs de stockage au poste d'emballage ;
où la période seuil est le temps estimé d'achèvement de la commande.

13. Support lisible par ordinateur stockant des instructions qui, lorsqu'elles sont exécutées par un ou plusieurs processeurs d'un système de commande d'un système automatisé de stockage et de récupération selon l'une quelconque des revendications 1 à 11, amènent le système de commande à :
recevoir une commande concernant un ou plusieurs articles stockés dans un ou plusieurs conteneurs de stockage parmi une pluralité de conteneurs de stockage ;
identifier un premier sous-ensemble de conteneurs de stockage de la pluralité de conteneurs de stockage, où chacun du premier sous-ensemble de conteneurs de stockage stocke un des un ou plusieurs articles de la commande ;
déterminer qu'un article d'un conteneur de stockage du premier sous-ensemble de conteneurs de stockage est indisponible ;
identifier un deuxième sous-ensemble de conteneurs de stockage de la pluralité de conteneurs de stockage, où chacun du deuxième sous-ensemble de conteneurs de stockage stocke l'article ou un article de substitution à l'article ;
déterminer, pour chacun du deuxième sous-ensemble de conteneurs de stockage, une ou plusieurs valeurs de paramètres associées au conteneur de stockage ;
sélectionner un conteneur de stockage dans le deuxième sous-ensemble de conteneurs de stockage en fonction des valeurs de paramètres associées au deuxième sous-ensemble de conteneurs de stockage ; et
ordonner à un véhicule robotisé de manutention de conteneurs de un ou plusieurs véhicules robotisés de manutention de conteneurs de récupérer le conteneur de stockage sélectionné ;
où les une ou plusieurs valeurs de paramètres associées au conteneur de stockage comprennent une durée estimée pour délivrer le conteneur de stockage au poste d'emballage ;
où la sélection du conteneur de stockage dans le deuxième sous-ensemble de conteneurs de stockage comprend de sélectionner, dans le deuxième sous-ensemble de conteneurs de stockage, un conteneur de stockage pour lequel la durée estimée pour délivrer le conteneur de stockage au poste d'emballage est inférieure à une période de temps seuil ; et
où les instructions, lorsqu'elles sont exécutées, amènent en outre le système de commande à :
déterminer un temps estimé d'achèvement de la commande, où le temps estimé d'achèvement de la commande est le temps nécessaire pour achever la livraison du premier sous-ensemble de conteneurs de stockage au poste d'emballage ;
où la période seuil est le temps estimé d'achèvement de la commande.
